# EUROPÄISCHE PATENTSCHRIFT

(11) **EP 0 635 515 B1**
(45) Veröffentlichungstag und Bekanntmachung des Hinweises auf die Patenterteilung: **12.04.2000**
(21) Anmeldenummer: 94111131.2
(22) Anmeldetag: 18.07.1994
(51) Int. Cl.: C07F 15/00, C01B 31/02, B01J 35/08

(54) **Metall-Fulleren-Interkalationsverbindungen, Verfahren zur Herstellung und Anwendung als Katalysatoren**
Metallofullerene intercalation compounds, process for their preparation and use as catalysts
Composés métallofullerènes d'intercalation, procédé de leur préparation et leur utilisation comme catalyseurs

(30) Priorität: 23.07.1993 DE 4324693
(43) Veröffentlichungstag der Anmeldung: 25.01.1995
(73) Patentinhaber: Max-Planck-Gesellschaft zur Förderung der Wissenschaften e.V., 80539 München (DE)
(72) Erfinder: Schlögl, Robert, Prof. Dr., D-60596 Frankfurt (DE); Werner, Harald, D-65760 Eschborn (DE); Wohlers, Michael, D-65760 Eschborn (DE)
(74) Vertreter: Weiss, Wolfgang, Dipl.-Chem. Dr.

(56) Entgegenhaltungen:
- WO-A-93/22239
- US-A- 5 300 203
- DATABASE WPI Week 9403, Derwent Publications Ltd., London, GB; AN 94-020205 & JP-A-5 327 038 (MITSUBISHI HEAVY IND CO LTD) 10. Dezember 1993
- CHEMICAL ABSTRACTS, vol. 121, no. 8, 22. August 1994, Columbus, Ohio, US; abstract no. 98265e, & MOL. CRYST. LIQ. CRYST. SCI. TECHNOL., SECT. A, Bd.245, 1994 Seiten 295 - 300 H. WERNER ET AL
- CHEMICAL ABSTRACTS, vol. 121, no. 8, 22. August 1994, Columbus, Ohio, US; abstract no. 96705z, & SPRINGER SER. SOLID-STATE SCI., Bd.117, 1993 Seiten 11 - 15 M.J. ROSSEINSKY ET AL

## Beschreibung

Die Herstellung von Metall-Fulleren-Komplexen, wie die Synthese des Hexakisdiethylphosphinoplatin-C₆₀-Komplexes und die Synthesen von Bis(triphenylphosphino)platin-C₆₀ und von Pentamethylcyclopentadienruthenium-C₆₀-Oligomeren wird von Fagan et al. (J. Am. Chem. Soc. 1991, 113, 9408; Science, 1991, 252, 1160; J. Am. Chem. Soc., 1989, 111, 1698) beschrieben.

Die Erzeugung von Fe-C₆₀-Komplexen erfolgte von Fraser et al. in Ionenstrahlexperimenten (J. Am. Chem. Soc., 1992, 114, 2726) ausgehend von C₆₀ + und Eisenpentacarbonyl. Andere Metall-Fulleren-Kationen wurden ebenfalls im Massenspektrometer erzeugt (J. Am. Chem. Soc., 1991, 113, 8186; ibid 1991, 113, 6298; ibid 1991, 113, 9418). In Substanz wurden die so erhaltenen Cluster nicht isoliert, da diese Herstellmethode zur Darstellung größerer Mengen Metall-Fulleren-Komplexe nicht geeignet ist. Aufgrund der hohen Reaktivität der Zwischenstufen sind die erhaltenen Verbindungen auch als Katalysatoren ungeeignet.
Rao und Mitarbeiter (J. Am. Chem. Soc., 1992, 114, 2272; Ind. J. Chem., 1992, F17) beschreiben die Herstellung von Fe-Fulleren-Komplexen, bei denen das Eisenatom im Inneren der Fullerenstruktur lokalisiert sein soll. Rao et al. beschreiben auch die Synthese anderer undefinierter Fe-Fulleren-Komplexe, deren Strukturen jedoch nicht angegeben werden, die jedoch analog zu den entsprechenden Graphitverbindungen keine Fulleren-Eisen-Verbindung, sondern zwei- oder dreiphasige Gemische von Eisen und/oder Eisenchlorid auf amorphem Fulleren darstellen.

In drei Arbeiten sind Verbindungen von Osmiumtetroxid (OsO₄) mit C₆₀ beschrieben, die durch Pyridinliganden am Osmiumatom stabilisiert werden (Hawkins et al., Science, 1992, 252, 312; Hawkins et al., J. Org. Chem., 1990, 55, 6250; Hawkins et al., J. Am. Chem. Soc., 1992, 114, 7954). Die Herstellung dieser Osmiumtetroxid-C₆₀-Addukte gelingt analog zur literaturbekannten Synthese von Addukten elektronenarmer Olefine. Die Arbeiten von Hawkins und Mitarbeitern hatten primär die Strukturbestimmung von C₆₀ und Möglichkeiten zur Funktionalisierung von Fullerenen zum Ziel.

Untersuchungen zu katalytischen Anwendungen von Metall-Fulleren-Komplexen sind bisher lediglich von Nagashima et al. (Chem. Lett., 1992, 1361) erwähnt worden. Die Autoren beschreiben dabei die Umsetzung von C₆₀ mit Dipalladiumtrisdibenzylidenacetonkomplex. Das erhaltene Palladium-C₆₀-Polymer wurde nicht genauer charakterisiert. Es ist jedoch davon auszugehen, daß es sich bei der hergestellten Verbindung um eine den isolierten Übergangsmetall-Fulleren-Komplexen ähnliche Struktur handelt, die lediglich polymer ist. Das Palladium-C₆₀-Polymer zeigte katalytische Eigenschaften als Hydrierkatalysator, vergleichbar denen eines Lindlar-Katalysators. C₆₀Pdₙ mit n < 3 zeigen dagegen keine Aktivität als Hydrierkatalysatoren (Nagashima et al., J. Chem. Soc., Chem. Commun., 1992, 377).

Von Nachteil bei den vorgenannten und ansonsten hergestellten amorphen Komplexverbindungen ist die Unklarheit, ob es sich um Stoffgemische, unreine Verbindungen oder verschiedene Phasen von Metallen, Metalloxiden und Fullerenen handelt. Für eine Anwendung von Metall-Fulleren-Komplexen als Katalysatoren oder Katalysatorvorstufen ist es jedoch aus Gründen der Reproduzierbarkeit notwendig, daß die eingesetzten Verbindungen definiert vorliegen.

Daher bestand ein großes Bedürfnis zur definierten Synthese von Metall-Fulleren-Interkalationsverbindungen, die als reine Stoffe vorliegen und daher als Katalysatoren verwendet werden können.

Überraschend wurde gefunden, daß die Synthese von definierten Übergangsmetall-Fulleren-Interkalationsverbindungen durch Umsetzung von nullwertigen Übergangsmetallverbindungen mit Fullerenen in einem Lösungsmittel gelingt.

Die Erfindung betrifft somit
1. Ein Verfahren zur Herstellung von definierten Übergangsmetall-Fulleren-Interkalationsverbindungen, dadurch gekennzeichnet, daß Übergangsmetallverbindungen in einem Lösungsmittel mit Fulleren oder fullerenhaltigem Ruß umgesetzt werden.
2. Die nach dem Verfahren erhaltenen Übergangsmetall-Fulleren-Interkalationsverbindungen.

Metallkomplexe, die Metall-Fulleren-Interkalationsverbindungen bilden, sind alle nullwertigen Übergangsmetallverbindungen oder Übergangsmetallverbindungen, die unter den Reaktionsbedingungen zur nullwertigen Verbindung reduziert werden können. Die nullwertigen Übergangsmetallverbindungen werden in der Regel in Form stabiler Komplexe mit Liganden eingesetzt. Beispiele für Übergangsmetallkomplexe sind Eisenpentacarbonyl, Dieisennonacarbonyl, Trieisendodecacarbonyl, Trirutheniumdodecacarbonyl, Platindibenzylidenaceton, Palladiumdibenzylidenaceton, Palladiumtetrakistriethylphosphin, Nickeltetracarbonyl. Die beschriebenen Verbindungen sind zum Teil kommerziell in großen Mengen verfügbar oder durch einfache Synthese analog zur Literatur (T. Ukai et al., I. Oranomet. Chem., 65, 1974, 253 und G. Brauer (Hrsg.), Handbuch der präparativen Anorganischen Chemie, Bd. 3, 1814-1838, F. Enke Verlag, Stuttgart) darstellbar.
Bevorzugt werden Übergangsmetallcarbonyl- oder Übergangsmetalldibenzylidenaceton-Komplexe eingesetzt.

Als Ausgangsmaterial für die Fullerenkomponente können bevorzugt C₆₀, C₇₀ oder deren Gemische verwendet werden. Es können aber auch alle anderen Fullerene oder Fullerenruß eingesetzt werden.

Die Fullerene können durch Herstellung von Fullerenruß im Lichtbogenverfahren mit anschließender Extraktion mit einem unpolaren organischen Lösungsmittel (Rohfulleren), wie z.B. in WO 92/09289 beschrieben, gewonnen werden. Die weitere Feinauftrennung kann säulenchromatographisch erfolgen. Die eingesetzten Fullerene sind zum Teil auch Handelsprodukte.

Geeignete Losungsmittel für die Herstellung der Verbindungen sind solche, die Fullerene zumindest teilweise lösen, wie aromatische Lösungsmittel wie Benzol, Toluol, Xylol, Ethylbenzol, Chlorbenzol, Dichlorbenzol, Tetrachlorkohlenstoff, Chloroform, Dichlormethan, Furan.

Geeignete Liganden für die Stabilisierung nullwertiger Übergangsmetalle sind alle denkbaren stabilisierenden literaturbekannten Liganden. Typische Beispiele für solche Liganden sind Carbonyle, Phosphine, Arsine, Olefine, Alkine, Stickstoff, Dibenzylidenaceton und, Aromaten. Bevorzugte Liganden sind Carbonyle und Dibenzylidenaceton.

Die Reaktion kann bei Temperaturen von -40 bis 250°C, bevorzugt 0 bis 200°C durchgeführt werden. Sie kann auch unter Druck, z.B. bei 1 bis 100 atm, bevorzugt 1 bis 10 atm, ausgeführt werden. Ferner kann die Umsetzung photochemisch, z.B. in Gegenwart einer Quecksilberdampflampe, durchgeführt werden.

Die Übergangsmetall-Fulleren-Interkalationsverbindungen fallen sofort oder innerhalb 7 Tagen, vorzugsweise in 6 bis 72 Stunden, aus.

Durch diese thermische, oder photochemische Behandlung werden die an die Metalle gebundenen Liganden aus den Übergangsmetallkomplexen ganz oder teilweise entfernt. Dabei fallen die Übergangsmetall-Fulleren-Interkalationsverbindungen als Niederschlag aus.

Die erfindungsgemäßen Übergangsmetall-Fulleren-Verbindungen sind im Gegensatz zu den bisher bekannten Metall-Fulleren-Verbindungen keine diskreten Komplexe oder polymere Übergangsmetall-Fulleren-Komplexe und auch keine ionischen Verbindungen wie die Alkalimetallfulleride. Überraschenderweise bilden sich bei der Umsetzung der Fullerene mit Übergangsmetall-(O)-Verbindungen neue Stoffe, die als Interkalationsverbindungen bezeichnet werden können.

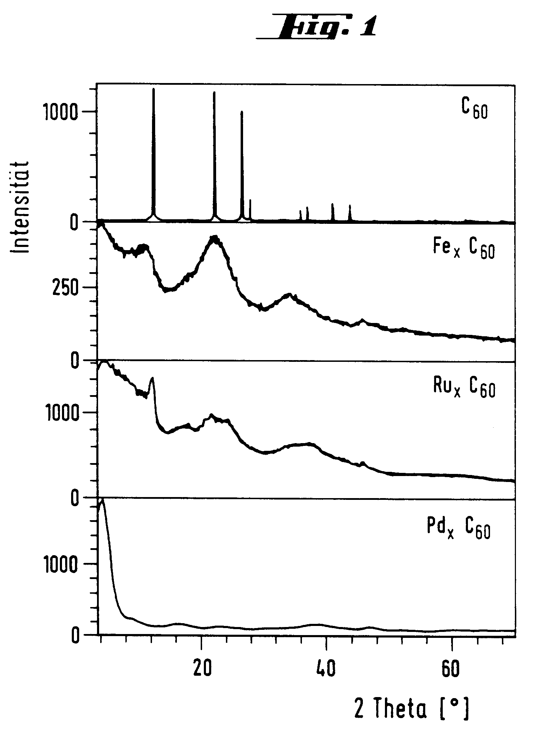

Die Strukturen wurden erstmalig durch eine Vielzahl moderner Analysemethoden eindeutig identifiziert. Die Metallelementaranalyse zeigt, daß alle Fulleren-Übergangsmetall-Interkalationsverbindungen zusätzliches organisches Material enthalten. Dieses ist in Form des Lösungsmittels oder der Liganden anwesend. Abbildung 1 zeigt die Pulver-Röntgen-Diffraktogramme der Übergangsmetall-Fulleren-Interkalationsverbindungen.

Die abgebildeten Daten demonstrieren, daß die Produkte im Vergleich zum Fulleren nanokristallin vorliegen. Derartige Strukturen sind bei einfachen Fulleren-Metallkomplexen bisher nicht beschrieben worden.

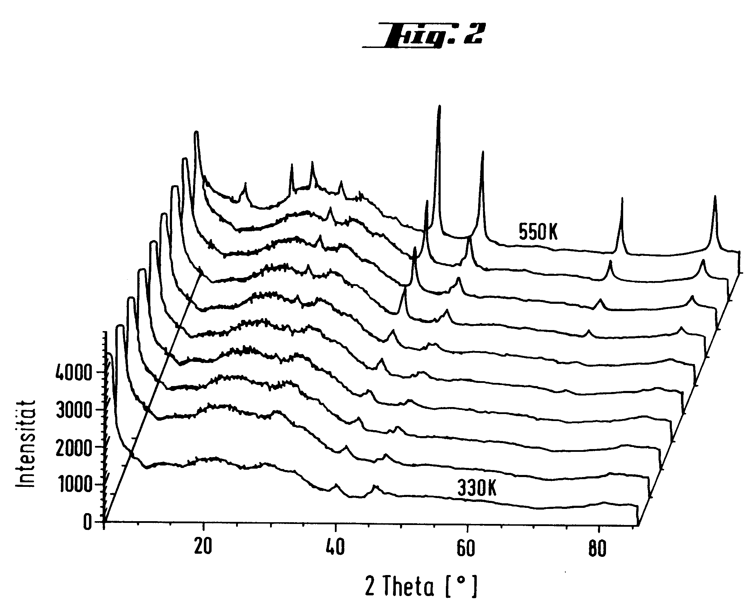

Ein weiterer Beweis für die angenommene Struktur ist das Hochtemperatur XRD (Cu-Bestrahlung) der Pd₃C₆₀-Verbindung (Abbildung 2). Beim Erhitzen von 300 K auf 550 K zersetzt sich die Verbindung in C₆₀ und elementares Palladium. Das Spektrum (Temperaturintervalle ≈ 30 K) zeigt dem Fachmann ein typisches Beispiel einer Deinterkalations-Reaktion vergleichbar mit Deinterkalations-Reaktionen von Graphit-Interkalationsverbindungen. Andere Übergangsmetall-Fulleren-Interkalationsverbindungen gehen ähnliche Deinterkalations-Reaktionen ein.

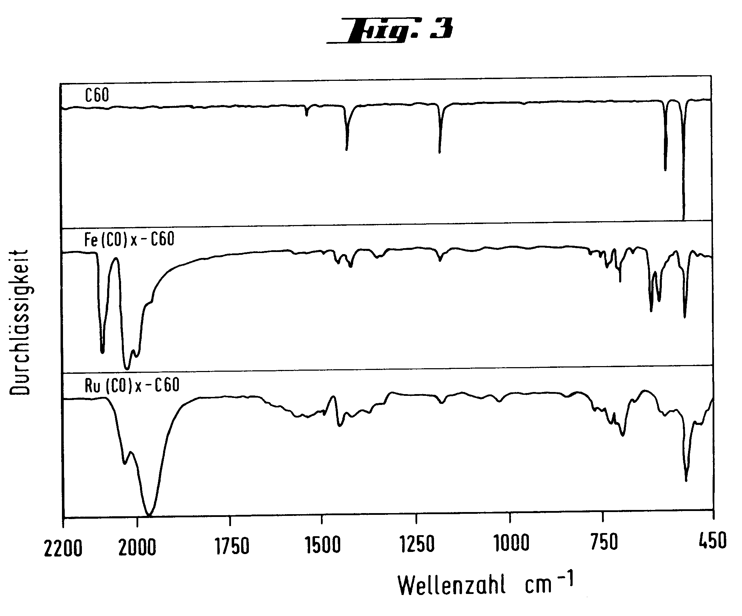

Die molekulare Struktur der eingelagerten Übergangsmetallverbindung konnte durch FT-IR-Spektren näher charakterisiert werden (Abbildung 3). Die Spektren der Eisen- und Ruthenium-Fulleren-Interkalationsverbindungen zeigen die Anwesenheit von Carbonylliganden an den Metallatomen. Die Aufsplittung der Carbonylbanden ist ein Indiz für den Einfluß der Fullerene auf die Übergangsmetallatome. Konsequenterweise ändert sich auch das Fulleren-Fingerprint-Muster.

Die Übergangsmetall-Fulleren-Interkalationsverbindungen sind als Katalysatoren besonders geeignet. Da die strukturelle Integrität des Materials auch unter drastischen Reaktionsbedingungen erhalten bleibt, erhält man besonders stabile Katalysatoren mit längerer Standzeit als herkömmliche Katalysatoren. Ein wesentlicher Anwendungsvorteil gegenüber herkömmlichen Metall-Kohlenstoffkatalysatoren ist in der gezielten chemischen Verankerung von Metallen am Fullerengerüst zu sehen, die durch die einzigartige Elektronenstruktur fullerenartiger Kohlenstoffgerüste ermöglicht wird. Die erhaltenen Metall-Fullerenkatalysatoren können in ihrer Wirksamkeit durch Promotoren wie Alkaliverbindungen und heterocyclische organische Verbindungen nachhaltig verbessert werden, solange die Promotoren nicht zur zerstörung der Fullerenmatrix führen.

Überraschenderweise weisen die erfindungsgemäßen Übergangsmetall-Fulleren-Interkalationsverbindungen außerdem eine hohe Selektivität bei der Hydrierung von Verbindungen mit mehreren funktionellen Gruppen auf. So wird beispielsweise bei einem Alkenal überwiegend die Carbonylfunktion, im Vergleich zu der C-C-Doppelbindung, hydriert.

### Beispiel 1:

### Synthese von Pd₃-C₆₀

- C₆₀:: 1,44 g (2 mmol)
- Pd(DBA)₂:: 3,45 g (6 mmol)
- Toluol:: 1000 ml

Das Toluol wurde 24 h über metallischem Na zum Rückfluß erhitzt und frisch destilliert. Nach vollständigem Lösen des C₆₀ im Toluol wurde der Palladiumdibenzylidenaceton (Pd(DBA)₂)-Komplex auf einmal zugegeben und anschließend 3 Tage unter Rückfluß zum Sieden erhitzt. Alle voranstehenden Arbeiten wurden unter Argon (Schlenktechnik) durchgeführt.
Nach Abkühlen der Reaktionslösung auf Raumtemperatur (unter Argon) wurde der ausgefallene Niederschlag an der Luft abgesaugt, mit Toluol, Aceton und Diethylether gewaschen und anschließend über Nacht im Vakuum getrocknet.
- Auswaage:: 1,727 g Pd₃C₆₀ (theoret. 1,652 g)

### Beispiel 2:

### Synthese von Pd₃-C₆₀

- C₆₀:: 0,648 g (0,9 mmol)
- Pd(DBA)₂:: 1,55 g (2,7 mmol)
- Toluol:: 600 ml

Das Toluol wurde 24 h über metallischem Na zum Rückfluß erhitzt und frisch destilliert. Nach vollständigem Lösen des C₆₀ im Toluol wurde der Palladium-Komplex auf einmal zugegeben und anschließend 3 Tage unter Rückfluß zum Sieden erhitzt. Alle voranstehenden Arbeiten wurden unter Argon (Schlenktechnik) durchgeführt.
Nach Abkühlen der Reaktionslösung auf Raumtemperatur (unter Argon) wurde der ausgefallene Niederschlag an der Luft abgesaugt, mit Toluol und Diethylether gewaschen und anschließend über Nacht im Vakuum getrocknet.
- Auswaage:: 890 mg Pd₃-C₆₀ (theoret. 743 mg)

### Beispiel 3:

### Synthese von Ru₃-C₆₀

- C₆₀:: 2161,9 mg (3 mmol)
- Ru₃(CO)₁₂:: 1918,0 mg (3 mmol)
- Toluol:: ca. 3000 ml

Toluol wurde 24 h über metallischem Na zum Rückfluß erhitzt und frisch destilliert. Nach vollständigem Lösen des C₆₀ im Toluol wurde das Ruthenium-Carbonyl auf einmal zugegeben und anschließend 7 Tage unter Rückfluß zum Sieden erhitzt. Alle voranstehenden Arbeiten wurden unter Argon (Schlenktechnik) durchgeführt. Nach Abkühlen der Reaktionslösung auf Raumtemperatur (unter Argon) wurde der ausgefallene Niederschlag an der Luft abgesaugt, mit Toluol gewaschen und anschließend über Nacht im Vakuum getrocknet.
- Auswaage:: 3650 mg Ru₃C₆₀

### Beispiel 4:

### Synthese von Ruₓ-Fullerenruß

- Fullerenruß (nicht extrahiert):: 3,5 g
- Ru₃(CO)₁₂:: 320 mg (0,5 mmol) = 151,7 mg Ru-Metall
- Toluol:: ca. 500 ml

Das Toluol wurde 24 h über metallischem Na zum Rückfluß erhitzt und frisch destilliert. Der Fullerenruß und das Ruthenium-Carbonyl wurden nacheinander unter Argon in das Toluol gegeben und anschließend 7 Tage unter Rückfluß zum Sieden erhitzt. Alle voranstehenden Arbeiten wurden unter Argon (Schlenktechnik) durchgeführt.
Nach Abkühlen der Reaktionslösung auf Raumtemperatur (unter Argon) wurde der ausgefallene Niederschlag an der Luft abgesaugt, mit Toluol gewaschen und anschließend über Nacht im Vakuum getrocknet. Das Filtrat enthielt weder Fullerene noch Ru-Carbonyle.

### Beispiel 5:

### Synthese von Ruₓ-Fullerenruß

- Fullerenruß (extrahiert):: 3,2 g
- Ru₃(CO)₁₂:: 320 mg (0,5 mmol) = 151,7 mg Ru-Metall
- Toluol:: ca. 500 ml

Das Toluol wurde 24 h über metallischem Na zum Rückfluß erhitzt und frisch destilliert. Der Fullerenruß und das Ruthenium-Carbonyl wurden nacheinander unter Argon in das Toluol gegeben und anschließend 7 Tage unter Rückfluß zum Sieden erhitzt. Alle voranstehenden Arbeiten wurden unter Argon (Schlenktechnik) durchgeführt.
Nach Abkühlen der Reaktionslösung auf Raumtemperatur (unter Argon) wurde der ausgefallene Niederschlag an der Luft abgesaugt, mit Toluol gewaschen und anschließend über Nacht im Vakuum getrocknet. Das Filtrat enthielt noch geringe Mengen höhere Ru-Carbonyle.

### Beispiel 6:

### Synthese von Pt₃-C₆₀

- C₆₀:: 2161,9 mg (3 mmol)
- Pt₃(CO)₁₂:: 2763,8 mg (3 mmol)
- Toluol:: ca. 3000 ml

Die Synthese von Pt₃-C₆₀ erfolgte analog Beispiel 3.

### Beispiel 7:

### Darstellung von Rh-C₆₀-Addukt

364,3 mg (0,342 mmol) Rh₆(CO)₁₆ und 2,05 g (2,84 mmol) C₆₀ werden in zwei Liter Toluol gelöst und mit einer Quecksilberdampflampe sieben Stunden lang bestrahlt. Die Temperatur der Lösung schwankt dabei im Bereich von 23-29°C. Nach Ende der Reaktion wird der Ansatz bis auf ein Volumen von 500 ml eingeengt und der ausgefallene schwarze Feststoff abfiltriert.
- Auswaage:: 1,78 g
- IR (*v*, cm⁻¹):: 1540 (w), 1430 (vs, C₆₀), 1182 (s, C₆₀) 725 (w)

### Beispiel 8:

### Synthese von Eisen-C₆₀-Interkalationsverbindungen

Eine stöchiometrische Menge von C₆₀ und Eisenpentacarbonyl wurden in Toluol gelöst und photochemisch bestrahlt. Die Eisencarbonyl-C₆₀-Interkalationsverbindung fiel aus und wurde abfiltriert.

### Beispiel 9:

### Verwendung von Pd₃-C₆₀ als Hydrierkatalysator

Die in Beispiel 1 hergestellte Pd₃-C₆₀-Interkalationsverbindung (1 mol%) wurde mit Cyclohexen und Wasserstoff (1bar) bei 27°C in Tetrahydrofuran bis zum vollständigem Umsatz gerührt. Der Katalysator wurde abfiltriert und konnte mehrere Male ohne Aktivitätsverlust wiedereingesetzt werden.

### Vergleichsbeispiel 1:

### Verwendung von Palladium auf Aktivkohle als Hydrierkatalysator

Analog wie in Beispiel 9 wurde Cyclohexen mit Palladium auf Aktivkohle (Fluka) (1 mol%) in THF umgesetzt. Nach einer Umsetzung war der Katalysator nicht mehr aktiv.

### Beispiel 10:

### Hydrierung von 2-Ethylhexenal

100 g 2-Ethylhexenal wurden in einem Rührautoklaven bei 50 bar und 150°C in Gegenwart von 0,36 g Ru-C 60 (0,1 % Ru) hydriert, bis keine Druckabnahme mehr festgestellt wurde. Nach 5 h war der Umsatz vollständig. Das Produktgemisch besteht aus 53,3 % 2-Ethylhexanol, 30,9 % cis- und trans-2-Ethylhexenol und 1 % 2-Ethylhexanal.

### Vergleichbeispiel 2:

100 g 2-Ethylhexenal wurden unter den gleichen Versuchsbedingungen wie in Beispiel 10 in Gegenwart von Ru/C (Nr. 4855 Fa. Engelhard) hydriert. Nach 3,5 h war die Hydrieraktivität erschöpft. Der Umsatz beträgt 80 %. Das Produktgemisch besteht aus 31,85 % 2-Ethylhexanol und 2-Ethylhexenol, 26 % 2-Ethylhexanal und 20 % Eddukt.

Beispiel 10 zeigt die hohe Selektivität des erfindungsgemäßen Katalysators zur Bildung der ungesättigten 2-Ethylhexenole.

## Patentansprüche

1. Verfahren zur Herstellung von Übergangsmetall-Fulleren-Interkalationsverbindungen,
**dadurch gekennzeichnet,**
daß Übergangsmetallverbindungen in einem Lösungsmittel mit Fulleren oder fullerenhaltigem Ruß umgesetzt werden.

2. Verfahren nach Anspruch 1,
**dadurch gekennzeichnet,**
daß Übergangsmetallverbindungen der Oxidationsstufe 0 eingesetzt werden.

3. Verfahren nach Anspruch 1,
**dadurch gekennzeichnet,**
daß als Übergangsmetallverbindungen Übergangsmetallcarbonyle eingesetzt werden.

4. Übergangsmetall-Fulleren-lnterkalationsverbindungen, erhältlich durch das Verfahren nach einem der Ansprüche 1 bis 3.

5. Verbindungen nach Anspruch 4,
**dadurch gekennzeichnet,**
daß die Metalle solche der 8. Nebengruppe sind.

6. Verbindungen nach Anspruch 5,
**dadurch gekennzeichnet,**
daß zusätzlich Liganden an die Metalle gebunden sind.

7. Verbindungen nach Anspruch 6,
**dadurch gekennzeichnet,**
daß der Ligand ein Carbonylligand ist.

8. Verbindungen nach Anspruch 6,
**dadurch gekennzeichnet,**
daß der Ligand ein Dibenzylidenacetonligand ist.

9. Verwendung von Verbindungen nach einem der Ansprüche 4 bis 8 als Katalysatoren.

## Claims

1. Process for producing transition metal-fullerene intercalation compounds,
**wherein**
the transition metal compounds are reacted in a solvent with fullerene or fullerene-containing carbon black.

2. Process as claimed in claim 1,
**wherein**
the transition metal compounds are used in the oxidation state 0.

3. Process as claimed in claim 1,
**wherein**
the transition metal carbonyls are used as transition metal compounds.

4. Transition metal-fullerene intercalation compounds obtainable by the process as claimed in one of the claims 1 to 3.

5. Compounds as claimed in claim 4,
**wherein**
the metals are from the 8th side group.

6. Compounds as claimed in claim 5,
**wherein**
ligands are additionally bound to the metals.

7. Compounds as claimed in claim 6,
**wherein**
the ligand is a carbonyl ligand.

8. Compounds as claimed in claim 6,
**wherein**
the ligand is a dibenzylideneacetone ligand.

9. Use of compounds as claimed in one of the claims 4 to 8 as catalysts.

## Revendications

1. Procédé pour la préparation de composés intercalaires fullerènes des métaux de transition, caractérisé en ce que les composés des métaux de transition sont mis en réaction dans un solvant avec des fullerènes ou du noir de fumée contenant des fullerènes.

2. Procédé selon la revendication 1, caractérisé en ce que l'on utilise des composés des métaux de transition de l'étape d'oxydation O.

3. Procédé selon la revendication 1, caractérisé en ce qu'en tant que composé des métaux de transition on utilise des carbonyles des métaux de transition.

4. Composés intercalaires de fullerènes des métaux de transition pouvant être obtenus par les procédés selon l'une des revendications 1 à 3.

5. Composés selon la revendication 4, caractérisés en ce que les métaux sont les métaux du 8^{ème} groupe auxiliaire.

6. Composés selon la revendication 5, caractérisés en ce que de façon supplémentaire des ligands sont liés aux métaux.

7. Composés selon la revendication 6, caractérisés en ce que le ligand est un ligand de carbonyle.

8. Composés selon la revendication 6, caractérisés en ce que le ligand est un ligand de dibenzylidène-acétone.

9. Utilisation de composés selon l'une des revendications 4 à 8 en tant que catalyseur.
